## Europäisches Patentamt

## European Patent Office

## Office européen des brevets

(19)

(11) Veröffentlichungsnummer: **0 040 417**
**B1**

(12) # EUROPÄISCHE PATENTSCHRIFT

(45) Veröffentlichungstag der Patentschrift:
23.11.83

(51) Int. Cl.³: **B 60 B 35/10**

(21) Anmeldenummer: 81103769.6

(22) Anmeldetag: 16.05.81

(54) Radverstelleinrichtung.

(30) Priorität: 20.05.80 US 151721

(43) Veröffentlichungstag der Anmeldung:
25.11.81 Patentblatt 81/47

(45) Bekanntmachung des Hinweises auf die Patenterteilung:
23.11.83 Patentblatt 83/47

(84) Benannte Vertragsstaaten:
AT DE FR GB IT SE

(56) Entgegenhaltungen:
FR - A - 1 192 621
FR - A - 2 183 416
FR - A - 2 316 089
FR - A - 2 397 295
GB - A - 378 275
US - A - 2 676 849
US - A - 3 279 831

(73) Patentinhaber: DEERE & COMPANY, 1 John Deere Road, Moline Illinois 61265 (US)

(72) Erfinder: Lemmon, Norman Frederick, 2518 Pleasant Drive, Cedar Falls Iowa 50613 (US)

(74) Vertreter: Gramm, Werner, Prof. Dipl.-Ing.,
Patentanwälte Gramm + Lins Theodor-Heuss-Strasse 2,
D-3300 Braunschweig (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Radverstelleinrichtung

Die Erfindung betrifft eine Radverstelleinrichtung, bestehend aus folgenden Merkmalen:

— eine Radwelle mit einer sich in Längsrichtung erstreckenden Zahnung und einer hierzu parallel, aber in Umfangsrichtung versetzt angeordneten Keilnut;

— eine drehbare, in diese Zahnung eingreifende Verstellvorrichtung;

— mehrere, die Radwelle jeweils teilweise umgreifende Spannbacken, von denen jede einen Nabenabschnitt sowie einen Radialflansch aufweist, wobei der Nabenabschnitt mit einer zylindrischen Innenfläche in Axialrichtung auf der Radwelle gleitet und eine kegelförmige Aussenfläche aufweist, deren grösster Durchmesser an den Radialflansch anschliesst, der in dem die kegelförmige Aussenfläche überragenden Bereich kreisförmig angeordnete Bohrungen aufweist;

— zumindest eine Spannbacke greift mit einem Keil in die genannte Keilnut ein zur Erzeugung einer Drehverbindung zwischen dieser Spannbacke und der Radwelle;

— eine konzentrisch zur Radwelle sowie den Spannbacken angeordnete Radnabe, die mit einer konischen Nabenbohrung auf den kegelförmigen Aussenflächen der Spannbacken aufliegt und Bohrungen aufweist, von denen einige mit den genannten Bohrungen in den Radialflanschen der Spannbacken fluchten, während zwei andere Bohrungen gegen undurchbohrte Anschlagflächen auf dem Radialflansch einer mit dem Keil versehenen Spannbacke gerichtet sind und ein Innengewinde aufweisen, in das wahlweise eine Abdrückschraube eingeschraubt ist, die mit ihrem freien Ende gegen die genannte Anschlagfläche weist;

— Spannmittel, die die Spannbacken mit der Radnabe verspannen.

Bei landwirtschaftlichen Traktoren ist es erforderlich, den Radstand in Anpassung an die verschiedenen durchzuführenden Arbeiten verändern zu können. Beim Pflügen z.B. ist es zweckmässig, die Zuglinie des Arbeitsgerätes in einer Fluchtlinie mit der Mitte des Traktors zu halten, jedoch eines der angetriebenen Traktorräder in der Furche laufen zu lassen, die von dem Pflug bei dem vorangehenden Arbeitsgang gezogen wurde. Bei der Felderbestellung hingegen ist es erforderlich, dass die Traktorräder genau zwischen den Pflanzenreihen laufen. Beim Übergang von der einen Arbeit zu der anderen muss der Traktorfahrer den Radstand der Traktorräder entsprechend verändern.

Da Traktorräder sehr schwer sind, insbesondere wenn sie zusätzlich mit Radgewichten belastet oder zur Erhöhung des Gewichtes mit Flüssigkeit gefüllt sind, ist anzustreben, dass der Traktor eine einfach zu bedienende Radverstelleinrichtung aufweist. Dies soll auch dann gelten, wenn die massgeblichen Traktorteile mit Schmutz und/oder Rost überzogen sind.

Die eingangs beschriebene Radverstelleinrichtung lässt sich der US-A Nr. 2676849 entnehmen.

Diese Ausführungsform umfasst zwei jeweils etwa halbkreisförmig ausgebildete und somit in die Radwelle nahezu vollständig umschliessende Spannbacken, die über Schraubbolzen mit der Radnabe verspannt sind. Diese Spannmittel sind dabei so ausgebildet, dass bei der einen Spannbacke die Schraubbolzen durch Bohrungen des Radialflansches hindurchgesteckt und in Gewindebohrungen der Radnabe eingeschraubt sind. Bei der anderen Spannbacke sind die Spannbolzen durch Bohrungen der Radnabe hindurchgesteckt und in Gewindebohrungen des Radialflansches der Spannbacke eingeschraubt. Die Radnabe weist eine einzige konische Nabenbohrung auf und wird durch Anziehen der vorstehend genannten Schraubbolzen mit ihrer konischen Nabenbohrung auf die kegelförmigen Aussenflächen der beiden Spannbacken gezogen. Die eine dieser beiden Spannbacken ist mit einem Keil in der Keilnut der Radwelle längsverschieblich geführt.

Die Verstellvorrichtung zur Relativverschiebung zwischen Radnabe und Radwelle besteht bei dieser vorbekannten Ausführungsforms aus einem Ritzel, das auf einem Schaft sitzt, der einen Sechskantkopf aufweist.

Bei der vorbekannten Konstruktion sind die Abdrückschrauben in Gewindelöcher der Radnabe eingeschraubt und weisen mit ihrem freien Ende gegen eine Anschlagfläche am Radialflansch der mit dem Keil versehenen Spannbacke.

Dieser vorbekannte Lösungsvorschlag weist mehrere Nachteile auf: Durch die Verwendung von nur zwei sich gegenüberliegenden Spannbacken ergeben sich verhältnismässig lange kegelförmige Aussenflächen, die einerseits aufwendig in der Herstellung sind und andererseits wegen ihrer grossen Fläche zu Problemen beim Lösen der Spannbacken von der Radnabe führen, wenn sich Rost angesetzt hat. Nachteilig ist ferner, dass sich diese Radverstelleinrichtung unter Feldbedingungen praktisch nicht betätigen lässt.

Ein anderer Lösungsvorschlag lässt sich der US-A Nr. 3279831 entnehmen. Hier sind zwei in Achsrichtung miteinander fluchtende Spannteile vorgesehen, die einerseits in eine Ausnehmung der Radwelle und andererseits in eine Ausnehmung der Radnabe eingreifen. Die beiden Spannkeile sind spiegelbildlich zueinander angeordnet, wobei die kleinste Keilhöhe im mittleren Bereich der Radnabe liegt. Beide Spannkeile werden gemeinsam von zwei Spannbolzen beaufschlagt, die sich mit ihrem Kopf gegen den einen Spannkeil abstützen und mit ihrem Ende in Gewindebohrungen des anderen Spannkeils eingeschraubt sind. Auch hier ist es schwierig, die Spannkeile von der Radnabe zu lösen. Vor allem aber fehlt bei diesem Lösungsvorschlag eine Verstellvorrichtung für die Relativverschiebung zwischen Radnabe und Radwelle.

Der Erfindung liegt die Aufgabe zugrunde, die eingangs erläuterte Radverstelleinrichtung so zu verbessern, dass sie sich einfacher herstellen und auch dann einfach und zuverlässig handhaben lässt, wenn die Einrichtung einer starken Verschmutzung unterworfen ist.

Diese Aufgabe wird gemäss der Erfindung durch folgende Merkmale gelöst:

— dass an beiden Seiten der Radnabe je ein Spannbackenpaar vorgesehen ist, auf deren kegelförmigen Aussenflächen die Radnabe mit zwei spiegelsymmetrisch, an beiden Seiten der Radnabe angeordneten Nabenbohrungen aufliegt;

— dass je eine Spannbacke eines mit Spannbackenpaares einem Keil in die Keilnut eingreift und von Spannmitteln zwischen Radwelle und Radnabe gepresst wird;

— dass jede Abdrückschraube durch eine Bohrung im Radialflansch der einen mit dem Keil versehenen Spannbacke geführt ist und die Anschlagfläche der anderen mit einem Keil versehenen Spannbacke beaufschlagt;

— dass die in die Zahnung eingreifende Verstellvorrichtung in einer Radialöffnung einer Spannbacke drehbar gelagert ist.

Durch die erfindungsgemässe Verwendung von zwei Paar Spannbacken können deren in kegelförmigen Aussenflächen sehr viel kürzer gehalten werden als bei der vorbekannten Ausführungsform, lassen sich dadurch sehr viel einfacher herstellen und neigen nicht so stark zum Festfressen in der konischen Nabenbohrung. Wegen der Verkürzung der Kegelfläche lassen sich auch engere Fertigungstoleranzen einhalten, wodurch Lufteinschlüsse und damit Rostbildung vermindert werden.

Die neue Radverstelleinrichtung eignet sich insbesondere für landwirtschaftliche Traktoren. Zur Betätigung der Radverstelleinrichtung bedarf es nur noch verhältnismässig geringer Schraubenschlüsselkräfte. Durch Anordnung von insgesamt vier Spannbacken ergibt sich eine vergrösserte Auflagefläche zwischen Radnabe und Radwelle und somit eine verbesserte Justierung. Die neue Einrichtung ist reversibel, so dass sich zwei Räder nebeneinander auf derselben Radwelle anordnen lassen.

Da die eigentliche Verstelleinrichtung in einer der Spannbacken angeordnet ist, lässt sich ein und dieselbe Radnabe für Radwellen mit unterschiedlichem Durchmesser verwenden.

Die Spannbacken sind vorzugsweise jeweils etwa halbkreisförmig ausgebildet, so dass jeweils ein Spannbackenpaar die Radwelle nahezu vollständig umgreift.

Die Verstellvorrichtung für die Relativverschiebung zwischen Radnabe und Radwelle ist vorteilhaft in an sich bekannter Weise ein Ritzel, das drehfest auf einem Schaft sitzt, der einen Sechskantkopf aufweist. Die Spannmittel können in ebenfalls an sich bekannter Weise Schraubbolzen sein.

Weitere Merkmale der Erfindung sind Gegenstand der Unteransprüche und werden anhand eines Ausführungsbeispieles mit den jeweils erzielten Vorteilen erläutert.

Um ein Rad auf seiner Radwelle zu verstellen, werden zuerst alle Spannmittel, also die vorstehend genannten Schraubbolzen gelöst. Dann werden die beiden Abdrückschrauben angezogen, die die beiden mit einem Keil versehenen, in Achsrichtung nebeneinanderliegenden Spannbacken auseinanderdrücken, wodurch in einfacher und zuverlässiger Weise ein Lösen dieser Spannbacken von der Radnabe erfolgt. Mit einem Schraubenschlüssel kann nunmehr der zylindrische Schaft und damit das auf diesem Schaft drehfest sitzende Ritzel gedreht werden, das in die Zahnung der Radwelle eingreift und letztere somit relativ gegenüber der Radnabe verschiebt. Hat die Radnabe ihre gewünschte Position erreicht, werden die Abdrückschrauben gelöst und die die Spannmittel bildenden Schraubbolzen angezogen. Der Traktor ist dann einsatzbereit.

In der Zeichnung ist eine als Beispiel dienende Ausführungsform der Erfindung dargestellt. Es zeigen:

Fig. 1 eine Radverstelleinrichtung in Seitenansicht (Blickrichtung in Richtung der Radwelle);

Fig. 2 einen Schnitt gemäss der Linie 2-2 in Fig. 1;

Fig. 3 die rückwärtige Seite der Darstellung in Fig. 1, und

Fig. 4 einen Schnitt gemäss der Linie 4-4 in Fig. 3.

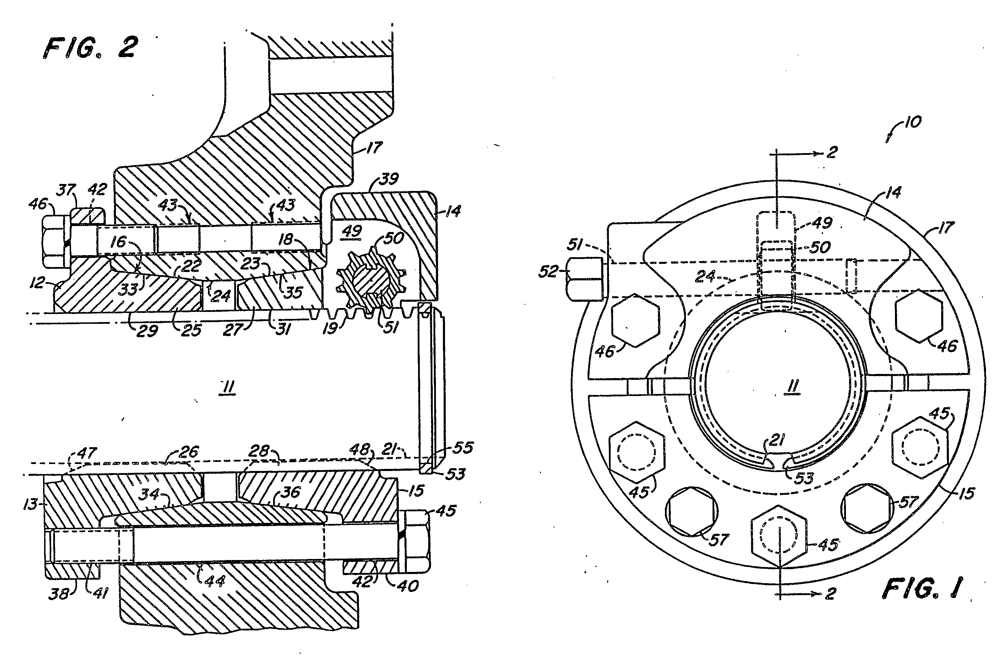

Die in Fig. 1 dargestellte Radverstelleinrichtung 10 ist für den Einbau in landwirtschaftliche Traktoren geeignet. Die Einrichtung umfasst eine Radwelle 11, die von vier Spannbacken 12, 13, 14 und 15 nahezu vollständig umgriffen wird, die jeweils etwa halbkreisförmig ausgebildet sind. Ausserdem umfasst die Einrichtung eine Radnabe 17.

Gemäss Fig. 2 ist die Radwelle 11 mit einer sich in Längsrichtung erstreckenden Zahnung 19 sowie einer hierzu parallel, aber in Umfangsrichtung versetzt angeordneten Keilnut 21 versehen. Die Zahnung 19 besteht vorzugsweise aus mit axialem Abstand voneinander angeordneten Zähnen, die über den erforderlichen Längenbereich in die Radwelle 11 eingearbeitet sind. Die Keilnut liegt vorzugsweise der Zahnung gegenüber.

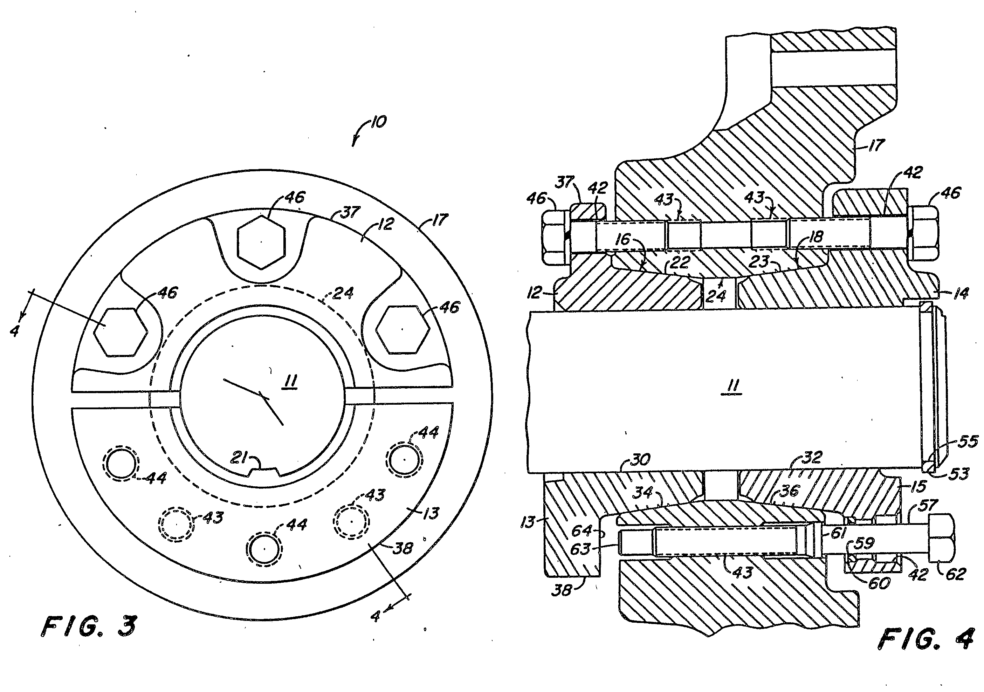

Die Radnabe 17 weist zwei gleich ausgebildete, spiegelsymmetrisch angeordnete und miteinander fluchtende konische Nabenbohrungen 16, 18 auf, deren Innenflächen mit 22, 23 bezeichnet sind. Der kleinste Durchmesser der beiden konischen Nabenbohrungen 16, 18 liegt etwa in der Mitte der Radnabe 17. Jedoch können die beiden Nabenbohrungen auch — wie es die Fig. 2 und 4 zeigen — durch einen zylindrischen Abschnitt 24 voneinander getrennt sein.

Jeder der Spannbacken 12-15 weist einen Nabenabschnitt 25, 26, 27, 28 sowie einen Radialflansch 37, 38, 39, 40 auf. Der Nabenabschnitt gleitet mit einer zylindrischen Innenfläche 29, 30, 31, 32 in Axialrichtung auf der Radwelle 11 und weist eine kegelförmige Aussenfläche 33, 34, 35, 36 auf, deren grösster Durchmesser an den Radialflansch anschliesst. Die kegelförmigen Aussenflächen 33-36 sind symmetrisch zur Radwelle 11 ausgebildet, so dass deren Mittelachse auch die gedachte Kegelachse bildet. Jeder Radialflansch 37-40 weist zumindest zwei Gewindebohrungen und/oder ohne Gewinde ausgebildete Bohrungen 41, 42 auf, die in dem die kegelförmige Aussenfläche überragenden Bereich des Radialflansches auf einem Kreis angeordnet sind. Die Radnabe 17 weist mit und ohne Gewinde versehene Bohrungen 43, 44 auf, von denen einige mit den genannten Bohrungen 41, 42 in den Radialflanschen 37-40 der Spannbacken 12-15 fluchten. Die genannten Bohrungen sind vorzugsweise Schraublöcher.

Die Spannbacken 12-15 werden in ihrer Lage zwischen Radwelle 11 und Radnabe 17 durch mehrere untere und obere Spannmittel 45, 46 gehalten, die durch die Bohrungen 41-44 hindurchgeführt bzw. in diese Gewindebohrungen eingeschraubt sind. Gemäss Fig. 2 werden die beiden Spannbacken 13, 15 durch die unteren, durch Schraubbolzen gebildeten Spannmittel 45 zusammengezogen und hierdurch zwischen die Radwelle 11 und die Innenflächen 22, 23 der Radnabe 17 gepresst. Die oberen Spannmittel 46 bestehen ebenfalls aus Schraubbolzen und legen die Spannbacken 12, 14 an der Radnabe 17 fest. Die Begriffe unten und oben dienen lediglich zur Beschreibung der in Fig. 2 dargestellten Ausführungsform; da die Radwelle 11 und somit die Radnabe 17 rotieren, ändert sich die Lage der Spannmittel 45, 46.

Die zylindrischen Innenflächen 30, 32 der beiden Spannbacken 13, 15 sind mit Keilen 47, 48 versehen (s. Fig. 2 und 4), die in die Keilnut 21 der Radwelle 11 eingreifen. Dadurch wird eine drehfeste und schlupffreie Verbindung zwischen Radwelle 11 und Radnabe 17 sichergestellt.

Die in Fig. 2 rechts oben dargestellte Spannbacke 14 unterscheidet sich von den drei übrigen Spannbacken durch eine Radialöffnung 49, die unmittelbar über der Zahnung 19 liegt. In dieser Öffnung 49 ist eine als Ritzel ausgebildete Verstellvorrichtung 50 angeordnet, die drehfest auf einem eine Betätigungseinrichtung bildenden zylindrischen Schaft 51 sitzt, der sich nach aussen erstreckt und hier mit einem Sechskantkopf 52 versehen ist. Das Ritzel 50 erstreckt sich durch die Öffnung 49 und steht im Eingriff mit den Zähnen der Zahnung 19 zur Längsverschiebung der Radnabe 17 auf der Radwelle 11, nachdem die Spanneinrichtung gelöst ist. Zwar ist als Beispiel für die Verschiebung der Radnabe 17 auf der Radwelle 11 eine Zahnung mit einem Ritzel angegeben, jedoch wird ausdrücklich darauf hingewiesen, dass auch andere Kombinationen (z.B. ein Schwenkhebel mit einer Zahnung; eine Schnecke mit einer Zahnung; eine Rückstange mit einer Zahnung o. dgl.; s. auch Ausführungsbeispiel in der US-A Nr. 2676849) zur Durchführung der genannten Verschiebung Verwendung finden können.

Durch Anordnung der Verstellvorrichtung 50 in einer Spannbacke anstelle der bisher verwendeten Anordnung in der Radnabe, lässt sich eine Standard-Radnabe für verschiedene Radwellen verwenden. Dadurch werden die Herstellungskosten für die Radnaben reduziert und die Möglichkeiten vergrössert, bestimmte Räder an den Traktoren zu verwenden. Der zylindrische Schaft und damit das auf ihm sitzende Ritzel können mit Hilfe eines üblichen Schraubschlüssels verdreht werden.

Um zu verhindern, dass die Radnabe 17 aus Versehen über das Ende der Radwelle 11 hinaus verschoben wird, ist auf der Radwelle 11 an ihrem Ende ein Federring 53 in einer Ringnut 55 angeordnet. Soll die Radnabe 17 von der Radwelle 11 abgezogen werden, kann der Federring 53 entfernt werden.

Zur Durchführung eines Radwechsels oder aber zur Justierung der Radnabe 17 auf der Radwelle 11 werden zuerst die unteren Spannmittel 45 (s. Fig. 2) gelöst. Gemäss Fig. 4 wird dann ein Paar Abdrückschrauben 57, die sich durch Bohrungen 42, 43 in der Spannbacke 15 bzw. der Radnabe 17 erstrecken, wahlweise angezogen. Die Abdrückschrauben 57 sind in der Spannbacke 15 durch einen Federring 59 gehalten, der teilweise in eine Ringnut 60 eingreift und den Durchtritt einer an der Abdrückschraube 57 vorgesehenen Schulter 61 vergrösserten Durchmessers verhindert. Die Abdrückschrauben 57 bleiben daher auch dann mit der Spannbacke 15 verbunden, wenn diese von der Radnabe 17 abgezogen wird.

Jede Abdrückschraube 57 weist einen Kopf 62, ein freies Ende 63 sowie die genannte Schulter 61 vergrösserten Durchmessers auf. Der Kopf 62 ist als Schraubenkopf ausgebildet, so dass die Abdrückschraube 57 mit Hilfe eines Schraubenschlüssels in die Radnabe 17 eingeschraubt bzw. aus dieser Radnabe herausgeschraubt werden kann. Werden beide Abdrückschrauben 57 in die Radnabe 17 eingeschraubt, schlagen schliesslich die freien Enden 63 der Abdrückschrauben gegen Anschlagflächen 64 der in Achsrichtung gegenüberliegenden Spannbacke 13 an, die bei Weiterdrehen der Abdrückschraube von der Radnabe 17 weggedrückt wird. Hierdurch werden etwaige Haftkräfte zwischen der Radnabe 17 und der kegelförmigen Aussenfläche 34 der Spannbacke 13 in einfacher Weise überwunden. Rost oder Verschmutzung auf der Spannbacke 13 und/oder der Radnabe 17 kann daher den Ausbau nicht nennenswert verhindern, da die von den beiden Abdrückschrauben 57 aufgebrachten Kräfte ausreichen, um etwaige Widerstände zu überwinden.

Sowie die Spannbacke 13 gelöst worden ist, werden die beiden Abdrückschrauben 57 zurückgedreht, bis die etwa in der Mitte jeder Abdrückschraube angeordnete Schulter 61 gegen den Federring 59 in der Spannbacke 15 anschlägt. Hierdurch wird nun auch die Spannbacke 15 mit ihrer kegelförmigen Aussenfläche 36 von der Radnabe 17 weggedrückt.

Die Verschiebung der Radnabe 17 auf der Radwelle 11 oder aber der Ausbau der Radnabe 17 können durchgeführt werden, ohne zuvor die beiden Spannbacken 13, 15 vollständig aus den Nabenbohrungen 16, 18 herausziehen zu müssen. Sowie die beiden Spannbacken 13, 15 ausreichend weit auseinander gedrückt worden sind, kann die Justierung durchgeführt werden. Wenn sich die Radnabe 17 in der gewünschten Position befindet, werden die beiden Abdrückschrauben 57 so positioniert, dass sie einen ausreichenden Abstand von der Spannbacke 13 aufweisen; abschliessend werden dann die unteren Schraubbolzen 45 angezogen.

Jede der vier Spannbacken 12, 13, 14 und 15 kann in die Radnabe 17 auch von der — bezogen auf die Fig. 2 und 4 — entgegengesetzten Seite eingebaut werden, so dass der Zugang zu der Verstellvorrichtung 50, den unteren und oberen Spannmitteln 45, 46 sowie den beiden Abdrückschrauben 57 auf der gegenüberliegenden Seite der Radnabe 17 gegeben ist. Diese Vielseitigkeit ist besonders vorteilhaft, denn sie erlaubt der Bedienungsperson, die Teile 12, 13, 14, 15, 45, 46 und 57 jeweils so anzuordnen, dass auch bei einer Umkehrung der Radorientierung auf der Radwelle 11 der jeweils einfachste Zugang gewährleistet ist. Hierdurch ist ferner die Möglichkeit gegeben, auf einer Radwelle zwei Räder Seite an Seite anzuordnen, wie es bei Doppelrädern notwendig ist.

Den vorstehenden Erläuterungen kann ein Durchschnittsfachmann viele Alternativlösungen, Modifikationen und Variationen entnehmen, die aber noch durch den Erfindungsgegenstand erfasst sein sollen.

**Patentansprüche**

1. Radverstelleinrichtung, bestehend aus folgenden Merkmalen:
— eine Radwelle (11) mit einer sich in Längsrichtung erstreckenden Zahnung (19) und einer hierzu parallel, aber in Umfangsrichtung versetzt angeordneten Keilnut (21);
— eine drehbare, in diese Zahnung (19) eingreifende Verstellvorrichtung (50);
— mehrere, die Radwelle (11) jeweils teilweise umgreifende Spannbacken (13-15), von denen jede einen Nabenabschnitt (25-28) sowie einen Radialflansch (37-40) aufweist, wobei der Nabenabschnitt mit einer zylindrischen Innenfläche (29-32) in Axialrichtung auf der Radwelle (11) gleitet und eine kegelförmige Aussenfläche (33-36) aufweist, deren grösster Durchmesser an den Radialflansch anschliesst, der in dem die kegelförmige Aussenfläche überragenden Bereich kreisförmig angeordnete Bohrungen (41, 42) aufweist;
— zumindest eine Spannbacke (13, 15) greift mit einem Keil (47, 48) in die genannte Keilnut (21) ein zur Erzeugung einer Drehverbindung zwischen dieser Spannbacke und der Radwelle (11);
— eine konzentrisch zur Radwelle (11) sowie den Spannbacken (12-15) angeordnete Radnabe (17), die mit einer konischen Nabenbohrung (16, 18) auf den kegelförmigen Aussenflächen (33-36) der Spannbacken (12-15) aufliegt und Bohrungen (43, 44) aufweist, von denen einige mit den genannten Bohrungen (41, 42) in den Radialflanschen (37-40) der Spannbacken (12-15) fluchten, während zwei andere Bohrungen (43) gegen undurchbohrte Anschlagflächen (64) auf dem Radialflansch (38) einer mit dem Keil (47) versehenen Spannbacke (13) gerichtet sind und ein Innengewinde aufweisen, in das wahlweise eine Abdrückschraube (57, 62) eingeschraubt ist, die mit ihrem freien Ende gegen die genannte Anschlagfläche (64) weist;
— Spannmittel (46), die die Spannbacken (12, 14) mit der Radnabe (17) verspannen, dadurch gekennzeichnet,
— dass an beiden Seiten der Radnabe (17) je ein Spannbackenpaar (12-15) vorgesehen ist, auf deren kegelförmigen Aussenflächen (33, 36) die Radnabe (17) mit zwei spiegelsymmetrisch, an beiden Seiten der Radnabe (17) angeordneten Nabenbohrungen (16, 18) aufliegt;
— dass je eine Spannbacke eines Spannbackenpaares (13, 15) mit einem Keil (47, 48) in die Keilnut (21) eingreift und von Spannmitteln (45) zwischen Radwelle (11) und Radnabe (17) gepresst wird;
— dass jede Abdrückschraube (57, 62) durch eine Bohrung (42) im Radialflansch (40) der einen mit dem Keil (48) versehenen Spannbacke (15) geführt ist und die Anschlagfläche (64) der anderen mit einem Keil (47) versehenen Spannbacke (13) beaufschlagt;
— dass die in die Zahnung (19) eingreifende Verstellvorrichtung (50) in einer Radialöffnung (49) einer Spannbacke (14) drehbar gelagert ist.

2. Radverstelleinrichtung nach Anspruch 1, dadurch gekennzeichnet, dass jede Spannbacke (12-15) etwa halbkreisförmig ausgebildet ist.

3. Radverstelleinrichtung nach einem der beiden Ansprüche 1 oder 2, dadurch gekennzeichnet, dass der kleinste Durchmesser der beiden konischen Nabenbohrungen (16, 18) etwa in der Mitte der Radnabe (17) liegt.

4. Radverstelleinrichtung nach einem der drei Ansprüche 1, 2 oder 3, dadurch gekennzeichnet, dass auf der Radwelle (11) an ihrem Ende ein Federring (53) angeordnet ist.

5. Radverstelleinrichtung nach einem der vorhergehenden Ansprüche, dadurch gekennzeichnet, dass die Verstellvorrichtung (50) ein Ritzel ist.

6. Radverstelleinrichtung nach einem der vorhergehenden Ansprüche, gekennzeichnet durch eine mit der Verstellvorrichtung (50) verbindbare Betätigungseinrichtung (51) zur Axialverschiebung der Radnabe (17) auf der Radwelle (11).

7. Radverstelleinrichtung nach Anspruch 6, dadurch gekennzeichnet, dass die Betätigungseinrichtung (51) ein zylindrischer Schaft ist.

8. Radverstelleinrichtung nach Anspruch 7, dadurch gekennzeichnet, dass der mit dem Ritzel (50) verbundene Schaft (51) einen Sechskantkopf (52) aufweist.

9. Radverstelleinrichtung nach einem der vorhergehenden Ansprüche, dadurch gekennzeichnet, dass die Spannmittel (45, 46) Schraubbolzen sind.

**Claims**

1. An adjustable wheel assembly comprising the following features:

— a wheel axle (11) having a rack (19) extending in longitudinal direction and a key-way (21) parallel thereto but offset in circumferential direction;

— rotatable adjusting means (50) meshing with said rack (19);

— clamping wedges (13-15) partly surrounding said wheel axle (11), each wedge having a hub portion (25-28) with an inner cylindrical surface (29-32) axially slidable upon said axle and an outer annular tapered portion (33-36), each of said wedges further having a radial flange (37-40) adjacent to the largest diameter of said tapered portion, each of said radial flanges containing a plurality of holes (41, 42) arranged in a circular arc outside of said respective tapered portion;

— at least one of said wedges (13, 15) has a key (47, 48) engaging said key-way (21) for creating rotational connection between said wedge and said axle (11);

— a wheel hub (17) concentric with said axle (11) and said wedges (12-15), said wheel hub having a tapered hub bore (16, 18) resting on said outer annular tapered portions (33-36) of said wedges (12-15), said wheel hub further having holes (43, 44), certain of said holes aligned with said holes (41, 42) in said radial flanges (37-40) of said wedges (12-15) and two other of said holes (43) aligned against unperforated bearing surfaces (64) on said radial flange (38) of one said key containing wedge (13) and having an internal thread into which, optionally, a lifting screw (57, 62) is threaded to engage with its free end said unperforated surface (64);

— fastening means (46) for clamping said wedges (12, 14) to said wheel hub (17), characterized in that

— there is a pair of wedges (12, 15) each on both sides of the wheel hub (17) which has two mirror-symmetrical tapered bores (16, 18) placed on both sides of the wheel hub (17) and resting on said outer annular tapered portions (33, 36);

— one wedge (13, 15) of each pair of wedges has a key (47, 48) engaging said key-way (21) and is forced between wheel axle (11) and wheel hub (17) by fastening means (15);

— each lifting screw (57, 62) is guided through a hole (42) in the radial flange (40) of one of said key (48) containing wedges (15) to engage said bearing surface (64) of said other key containing wedge (13);

— said adjusting means (50) meshing with said rack (19) is rotatably mounted in a radial opening (49) of one of said wedges (14).

2. Adjustable wheel assembly according to claim 1, wherein each of said wedges (12-15) is approximately semicircular in shape.

3. Adjustable wheel assembly according to claim 1 or 2, wherein the smallest diameter of both tapered hub bores (16, 18) is approximately in the middle of said wheel hub (17).

4. Adjustable wheel assembly according to claim 1, 2 or 3, wherein a snap ring (53) is attached to the outer end of said axle (11).

5. Adjustable wheel assembly according to one of the preceeding claims, wherein said adjusting means (50) is a pinion gear.

6. Adjustable wheel assembly according to one of the preceeding claims, wherein actuating means (51) are connectable to said adjusting means (50) for axially moving said wheel hub (17) along said wheel axle (11).

7. Adjustable wheel assembly according to claim 6, wherein said actuating means (51) is a cylindrical shaft.

8. Adjustable wheel assembly according to claim 7, wherein said shaft (51) connected with said pinion gear (50) comprises a hexagonal head (52).

9. Adjustable wheel assembly according to one of the preceeding claims, wherein said fastening means (45, 46) are screw-bolts.

## Revendications

1. Dispositif de réglage de roue présentant les particularités suivantes:

— un arbre de roue (11) muni d'une denture (19) s'étendant dans le sens longitudinal et d'une rainure de clavette (21) parallèle à la précédente, mais décalée dans le sens circonférentiel;

— un dispositif de réglage rotatif (50) engrenant avec cette denture (19);

— plusieurs mâchoires de serrage ou de blocage (12-15) entourant chaque fois partiellement l'arbre de roue (11), chacune comportant un tronçon de moyeu (25-28) ainsi qu'une bride radiale (37-40), le tronçon de moyeu glissant par une surface cylindrique intérieure (29-32) sur l'arbre de roue (11) dans le sens axial et présentant une surface extérieure conique (33-36) dont le diamètre maximal se raccorde à la bride radiale qui comporte, dans la zone faisant saillie par rapport à la surface extérieure conique, des perçages (41, 42) circulaires;

— au moins une mâchoire de serrage (13, 15) s'engage par une clavette (47, 48) dans ladite rainure de clavette (21) pour réaliser une liaison angulaire entre cette mâchoire de serrage et l'arbre de roue (11);

— un moyeu de roue (17) disposé concentriquement à l'arbre de roue (11), ainsi qu'aux mâchoires de serrage (12-15), ce moyeu de roue prenant appui par un alésage conique (16, 18) sur les surfaces extérieures coniques (33-36) des mâchoires de serrage (12-15) et comportant des perçages (43, 44) parmi lesquels certains sont alignés avec lesdits perçages (41, 42) prévus dans les brides radiales (37-40) des mâchoires de serrage (12-15), tandis que deux autres perçages (43) sont orientés vers des surfaces de butée non percées (64), ménagées sur la bride radiale (38) d'une mâchoire de serrage (13) munie de la clavette (47), et comportent un filetage intérieur dans lequel une vis de dégagement (57, 62) est engagée sélectivement, cette vis étant dirigée par son extrémité libre vers ladite surface de butée (64);

— des organes de blocage (46) qui bloquent les mâchoires de serrage (12, 14) avec le moyeu de roue (17),

caractérisé en ce que:

— il est prévu, sur les deux côtés du moyeu de roue (17), chaque fois une paire de mâchoires (12-15) sur les surfaces extérieures coniques (33-36) desquelles le moyeu de roue (17) vient prendre appui par deux alésages (16, 18) disposés, de façon optiquement symétrique, des deux côtés du moyeu de roue (17);

— chaque mâchoire de serrage d'une paire de mâchoires de serrage (13, 15) s'engage par une clavette (47, 48) dans la rainure de clavette (21) et est serrée, par des organes de blocage (45), entre l'arbre de roue (11) et le moyeu de roue (17);

— chaque vis de dégagement (57, 62) est guidée à travers un perçage (42) prévu dans la bride radiale (40) de la mâchoire de serrage (15) munie de la clavette (48), et agit sur la surface de butée (64) de l'autre mâchoire de serrage (13) munie d'une clavette (47);

— le dispositif de réglage (50) engrenant avec la denture (19) est monté à rotation dans un orifice ou évidement radial (49) d'une mâchoire de serrage (14).

2. Dispositif de réglage de roue suivant la revendication 1, caractérisé en ce que chaque mâchoire de serrage (12-15) a une forme sensiblement semi-circulaire.

3. Dispositif de réglage de roue suivant l'une des revendications 1 ou 2, caractérisé en ce que le plus petit diamètre des deux alésages coniques (16, 18) du moyeu se trouve sensiblement au milieu du moyeu de roue (17).

4. Dispositif de réglage de roue suivant l'une des revendications 1, 2 ou 3, caractérisé en ce qu'une bague d'arrêt élastique (53) est disposée à une extrémité sur l'arbre de roue (11).

5. Dispositif de réglage de roue suivant l'une quelconque des revendications précédentes, caractérisé en ce que le dispositif de réglage (50) est formé par un pignon droit.

6. Dispositif de réglage de roue suivant l'une quelconque des revendications précédentes, caractérisé par un dispositif d'actionnement (51) pouvant être relié au dispositif de réglage (50) pour le déplacement axial du moyeu de roue (17) sur l'arbre de roue (11).

7. Dispositif de réglage de roue suivant la revendication 6, caractérisé en ce que le dispositif d'actionnement (51) est formé par un axe cylindrique.

8. Dispositif de réglage de roue suivant la revendication 7, caractérisé en ce que l'axe (51) relié au pignon droit (50) comporte une tête à six pans (52).

9. Dispositif de réglage de roue suivant l'une quelconque des revendications précédentes, caractérisé en ce que les moyens de blocage (45, 46) sont constitués par des boulons ou des vis.

FIG. 2

FIG. I

0 040 417

FIG. 4

FIG. 3